# EUROPEAN PATENT SPECIFICATION

(11) **EP 4 620 598 B1**
(45) Date of publication and mention of the grant of the patent: **16.09.2026**
(21) Application number: 23926120.9
(22) Date of filing: 28.12.2023
(51) Int. Cl.: B22F 3/20, B22F 3/12, B22F 3/15, B21C 23/00, B21C 23/08, B21C 23/22, B21C 23/32, C22C 1/04

(54) **LOW-COST, HIGH-HOMOGENEITY AND LARGE-SPECIFICATION POWDER HIGH-TEMPERATURE ALLOY BAR, AND HOT EXTRUSION METHOD THEREFOR**
KOSTENGÜNSTIGER, HOCHHOMOGENER UND HOCHSPEZIFISCHER PULVER-HOCHTEMPERATUR-LEGIERUNGSSTAB UND HEISSEXTRUSIONSVERFAHREN DAFÜR
BARRE EN ALLIAGE À HAUTE TEMPÉRATURE PULVÉRULENT À FAIBLE COÛT, HOMOGÉNÉITÉ ÉLEVÉE ET GRANDE SPÉCIFICATION, ET PROCÉDÉ D'EXTRUSION À CHAUD ASSOCIÉ

(30) Priority: 08.12.2023 CN 202311674831
(43) Date of publication of application: 24.09.2025
(73) Proprietor: Gaona Aero Material Co., Ltd., Haidian Beijing 100081 (CN); Qinghai Zhongtai Manufacturing Co., Ltd., Haidong, Qinghai 810699 (CN)
(72) Inventor: QU, Jinglong, Beijing 100081 (CN); LIU, Mingdong, Beijing 100081 (CN); JIA, Jian, Beijing 100081 (CN); SHI, Yingnan, Beijing 100081 (CN); LIU, Jiantao, Beijing 100081 (CN); ZHANG, Mengdi, Beijing 100081 (CN); TIAN, Tian, Beijing 100081 (CN); HOU, Qiong, Beijing 100081 (CN); JI, Hongyan, Beijing 100081 (CN); YAN, Ting, Beijing 100081 (CN); ZHANG, Haopeng, Beijing 100081 (CN); LI, Deqing, Qinghai 810699 (CN); DU, Hongqiang, Qinghai 810699 (CN)
(74) Representative: Forresters IP LLP
(86) International application number: PCT/CN2023/142778
(87) International publication number: WO 2024/183426

(56) References cited:
- CN-A- 104 593 702
- CN-A- 104 593 702
- CN-A- 104 741 612
- CN-A- 104 741 612
- CN-A- 105 441 844
- CN-A- 106 807 794
- CN-A- 113 305 289
- CN-A- 113 305 289
- CN-A- 114 273 658
- CN-A- 114 273 658
- CN-U- 219 483 795
- CN-U- 219 483 795
- US-A- 5 482 672
- US-A- 5 482 672

## Description

### TECHNICAL FIELD

The present invention relates to the technical field of superalloy bars, and in particular to a low-cost, high-homogeneity, and large-scale powder metallurgy superalloy bar and a hot extrusion method thereof.

### BACKGROUND

Powder metallurgy superalloys are superalloys produced by powder metallurgy processes. During a powder-making process, powder particles are produced through the rapid solidification of trace liquids, and the segregation of components is limited to a powder particle size or lower, which eliminates the macroscopic segregation in conventional casting. In addition, a powder produced after the rapid solidification has outstanding advantages such as homogeneous structures and fine grains, which significantly improves the mechanical properties and thermal processing properties of an alloy. Thus, the powder metallurgy superalloys are necessary materials for key components such as turbine disks of modern high-performance aero-engines. The powder metallurgy superalloys have a high alloying degree, a narrow hot processing window, and large deformation resistance, and require a cladding extrusion method.

A hot extrusion process is a processing technology where a high temperature and a pressure are applied to a raw material to make properties of the raw material change. The hot extrusion process combines the characteristics of hot compression and hot deformation, and can significantly improve a metallurgical quality of an alloy and improve and give full play to the potential properties of an alloy. Alloy bars manufactured by the existing hot extrusion method for powder metallurgy superalloy bars have a small diameter, an inhomogeneous structure, a large grain size grade difference, a low material utilization ratio, and a high production cost, and the existing hot extrusion method for powder metallurgy superalloy bars cannot allow extrusion-cogging at a large extrusion ratio.

CN113305289A discloses a flat die hot extrusion technique of nickel base powder high temperature alloy, wherein, specifically comprising: step 1), the nickel-based high temperature alloy FGH4096 powder obtained by using plasma rotating electrode powder preparation method for electrostatic removing impurity, sieving to obtain qualified powder with granularity of 15 ~ 53 µm; step 2), putting the obtained qualified powder in the stainless steel sheath (4), vacuum filling powder, degassing and sealing welding process; step 3), hot isostatic pressing the stainless steel sheath (4) filled with powder to obtain blank; step 4), uniformly coating antioxidant on the blank surface obtained in the step 3), and heating to 200 ~ 250 degrees centigrade, keeping the temperature for 2 ~ 4h, air cooling to the room temperature; step 5), heating the blank processed in the step 4) to 450 to 550 ° C in the heating furnace, keeping the temperature for 2 to 8h, then raising the temperature to 1050 to 1100 ° C at a speed of 10 to 20 ° C per second; step 6), transferring the blank processed in the step 5) to the extrusion working table for hot extrusion to obtain extrusion bar; wherein the transfer time of the blank transferred from the heating furnace to the extrusion working table is not more than 50s, and uniformly spraying glass lubricant on the surface of the blank in the transfer time; the extrusion ratio of the extrusion working table is 4: 1 to 7: 1; the extruding rod (1) speed is 30 to 80mm/s; step 7), cooling the extruded bar obtained in step 6) to obtain the extrusion state nickel base powder high temperature alloy FGH4096 bar.

CN106807794A discloses a method for determining hot extrusion process parameters for nickel-based high-temperature alloy. The method includes the steps that according to a nickel-based high-temperature alloy material, a thermal compression test is simulated under a preliminarily set temperature range and a strain rate, so that a stress-strain curve of the nickel-based high-temperature alloy is obtained; a constitutive equation of the nickel-based high-temperature alloy is constructed according to the stress-strain curve; a hot working graph of the nickel-based high-temperature alloy is established according to the stress-strain curve, and the hot extrusion process parameters for the nickel-based high-temperature alloy are preliminarily obtained after analysis; and the verified constitutive equation is imported into finite element software, the temperature field and the stress strain field of the nickel-based high-temperature alloy under the initial hot extrusion process parameters are simulated, and the hot extrusion process parameters for the nickel-based high-temperature alloy are obtained after optimization.

### SUMMARY

In view of the above analysis, the present invention is intended to provide a large-scale powder metallurgy superalloy bar and a hot extrusion method thereof, so as to solve at least one of the following problems faced by the existing hot extrusion method for powder metallurgy superalloy bars: 1. Alloy bars manufactured by the existing hot extrusion method for powder metallurgy superalloy bars have a small diameter, that is, large-scale bars cannot be manufactured by the existing hot extrusion method. 2. Alloy bars manufactured by the existing hot extrusion method for powder metallurgy superalloy bars have an inhomogeneous structure and a large grain size grade difference. 3. Alloy bars manufactured by the existing hot extrusion method for powder metallurgy superalloy bars have a low material utilization rate and a high production cost. 4. The existing hot extrusion method for powder metallurgy superalloy bars cannot allow extrusion-cogging at a large extrusion ratio.

The objective of the present invention is mainly allowed through the following technical solutions:

In a first aspect, the present invention provides a hot extrusion method of a low-cost, high-homogeneity, and large-scale powder metallurgy superalloy bar, in accordance with claim 1.

In a second aspect, the present invention provides a low-cost, high-homogeneity, and large-scale powder metallurgy superalloy bar manufactured by the hot extrusion method described above, in accordance with claim 2.

Compared with the prior art, the present invention can allow at least one of the following beneficial effects:
1. The hot extrusion method of a superalloy bar provided by the present invention can reduce a preheating and spray-coating temperature of an anti-oxidation coating. In the hot extrusion method, the anti-oxidation coating is preheated at a low temperature and then sprayed, controlled to be slowly dried, and then heated to a high temperature, which can ensure that the anti-oxidation coating is not easy to fall off. Through a synergistic effect of an extrusion die angle and an extrusion speed, the hot extrusion method can ensure that an extruded bar can have a large extrusion ratio and a homogeneous structure and the phenomena such as extrusion failure can be avoided.
2. Through a synergistic effect of the arrangement of a specific extrusion front block structure with other process parameters in a hot extrusion process, the hot extrusion method of a superalloy bar provided by the present invention can significantly reduce a wrapping degree of a front segment of an extruded bar, eliminate the "mushroom head" phenomenon, improve a material utilization rate, and reduce a production cost compared with the existing hot extrusion method, and has a material utilization rate of higher than 80%.
3. A powder metallurgy superalloy bar manufactured by the hot extrusion method of a superalloy bar provided by the present invention has a diameter of larger than or equal to 300 mm, a high material utilization rate, a homogeneous structure, a core grain size grade of 9 to 11, an edge grain size grade of 9 to 10, and a grain size grade difference of less than or equal to 1.

The above technical solutions in the present invention can also be combined with each other to provide increased preferred combination solutions. Other features and advantages will be described in the following specification, and some advantages will become apparent from the specification or be understood by implementing the present invention. The objectives and other advantages of the present invention may be implemented or derived by those specifically indicated in the description and accompanying drawings.

### BRIEF DESCRIPTION OF THE DRAWINGS

The accompanying drawings are provided merely for illustrating specific embodiments and are not considered as limiting the present invention. Throughout the accompanying drawings, the same reference numerals represent the same components.
FIG. 1 is a schematic structural diagram of an extrusion billet provided in an embodiment of the present invention;
FIG. 2 shows images of core and edge structures of the low-cost, high-homogeneity, and large-scale powder metallurgy superalloy bar manufactured in Example 1 of the present invention;
FIG. 3 shows a head of the low-cost, high-homogeneity, and large-scale powder metallurgy superalloy bar manufactured in Example 1 of the present invention;
FIG. 4 shows a tail of the low-cost, high-homogeneity, and large-scale powder metallurgy superalloy bar manufactured in Example 1 of the present invention;
FIG. 5 shows a head of a powder metallurgy superalloy bar manufactured in Comparative Example 1;
FIG. 6 shows a tail of the powder metallurgy superalloy bar manufactured in Comparative Example 1;
FIG. 7 is a physical picture of the low-cost, high-homogeneity, and large-scale powder metallurgy superalloy bar manufactured in Example 1 of the present invention; and
FIG. 8 is a physical picture of the powder metallurgy superalloy bar manufactured in Comparative Example 1.

### Reference numerals:

1: ingot; 2: front block; and 3: rear block.

### DETAILED DESCRIPTION OF THE EMBODIMENTS

Preferred embodiments of the present invention will be described in detail below with reference to the accompanying drawings. The accompanying drawings constitute a part of the present invention, and are used together with the embodiments of the present invention to explain the principles of the present invention rather than to limit a scope of the present invention.

The present invention provides a hot extrusion method of a low-cost, high-homogeneity, and large-scale powder metallurgy superalloy bar, including the following steps:
S1: a superalloy powder is injected into a vacuum stainless-steel-shell mold and subjected to a hot isostatic pressing treatment to obtain a powder metallurgy superalloy ingot;
S2: a front block and a rear block are welded to front and rear ends of the powder metallurgy superalloy ingot respectively to obtain a first extrusion billet;
S3: the first extrusion billet is preheated to 150°C to 200°C, an anti-oxidation coating is evenly applied on a surface of the first extrusion billet to obtain a first intermediate billet, and the first intermediate billet is heated to 1,040°C to 1,150°C and kept at this temperature to obtain a second extrusion billet;
S4: a lubricant is evenly sprayed on a surface of the second extrusion billet to obtain a second intermediate billet, a glass block is placed at a front end of the second intermediate billet to obtain a third intermediate billet, and the third intermediate billet is placed in a preheated extrusion die to allow extrusion to obtain an extruded bar; and
S5: the extruded bar is air-cooled to room temperature, and non-steady segments at a head and a tail of the extruded bar are mechanically cut to obtain the powder metallurgy superalloy bar.

Specifically, in the S1, the superalloy powder is any one selected from the group consisting of FGH4095, FGH4096, FGH4720Li, FGH4097, FGH4098, and fourth-generation powder metallurgy superalloys. Conditions of the hot isostatic pressing treatment are not limited to a type of the superalloy powder, and a powder metallurgy superalloy ingot can be obtained under conventional hot isostatic pressing treatment conditions.

According to the invention, in the S2, a cross section of the front block is a trapezoid-like shape that has two non-parallel sides in arcs and is axisymmetric; and radians corresponding to the arcs each are 30° to 35°. For example, the radians corresponding to the arcs each are 31°, 32°, 33°, or 34°. When a front segment of an extrusion billet is deformed, an edge metal and a middle metal undergo different deformation flows, such that the front block wraps a bar and a bar utilization rate is reduced. An axial cross section of the front block in the present invention is arc-shaped. Compared with the conventional front block (with a circular axial cross section), the arc-shaped front block can significantly reduce a degree of wrapping a front segment of an extruded bar and eliminate the "mushroom head" phenomenon. Thus, the use of the front block with the above structure can improve a utilization rate of a front segment of a bar.

Specifically, in the S2, radial shapes and areas of the front block and the rear block are consistent with a radial shape and area of the ingot, and the front block and the rear block each have a thickness of 100 mm to 400 mm.

According to the invention, in the S3, the first extrusion billet is preheated to 150°C to 200°C, the anti-oxidation coating is evenly applied on the surface of the first extrusion billet and controlled to be slowly dried to obtain the first intermediate billet, and then the first intermediate billet is placed in a heating furnace, and heated to 1,040°C to 1,150°C and kept at this temperature for 7 h to 24 h, which can ensure that the anti-oxidation coating is not easy to fall off. For example, the first extrusion billet is preheated to 160°C, 170°C, 180°C, or 190°C; and the first intermediate billet is heated to 1,050°C, 1,060°C, 1,070°C, 1,080°C, 1,090°C, 1,100°C, 1,110°C, 1,120°C, 1,130°C, or 1,140°C and kept at this temperature for 8 h, 9 h, 10 h, 11 h, 12 h, 13 h, 14 h, 15 h, 16 h, 17 h, 18 h, 19 h, 20 h, 21 h, 22 h, 23 h, or 24 h. The anti-oxidation coating is one selected from the group consisting of P35-a3, TE61-20, and ZS1051.

According to the invention, in the S4, an extrusion die is preheated at 150°C to 200°C before the extrusion. For example, the extrusion die is preheated at 160°C, 170°C, 180°C, or 190°C. A material of the extrusion die itself has a corresponding strength within a specified temperature range. The higher the temperature of the preheating, the smaller the extrusion resistance of the extrusion die itself and the smoother the extrusion process of the billet. However, if the temperature of the preheating is too high, the extrusion die is easy to completely lose its strength and thus is damaged. Given a comprehensive consideration, the extrusion die is preheated at 150°C to 200°C.

After the second extrusion billet is discharged, the lubricant is evenly sprayed on the surface of the second extrusion billet without being cooled to obtain the second intermediate billet, the glass block is placed at the front end of the second intermediate billet to obtain the third intermediate billet, and the third intermediate billet is placed in the preheated extrusion die to allow extrusion with an extrusion die angle of 90° to 130°, an extrusion speed of 20 mm/s to 25 mm/s, and an extrusion ratio of (8-9) : 1 to obtain the extruded bar. For example, the extrusion die angle is 95°, 100°, 105°, 110°, 115°, 120°, or 125°; the extrusion speed is 20.5 mm/s, 21 mm/s, 21.5 mm/s, 22 mm/s, 22.5 mm/s, 23 mm/s, 23.5 mm/s, 24 mm/s, or 24.5 mm/s; and the extrusion ratio is 8:1, 8.5:1, or 9:1.

If the extrusion die angle is too small, an extrusion force will increase, resulting in a surge in an extrusion force of an extruder. According to the principle of acting and counter-acting forces, pressures acting on the mold and the ingot increase, which increases metal flow rates of the bar ingot and the mold material and leads to a large amount of heat in a short time. After the recrystallization of the bar ingot is dynamically recovered, a grain size of a surface structure of the bar is obviously larger than a grain size of a core structure of the bar, resulting in poor structural homogeneity. If the extrusion die angle is too large, an extrusion force acts on the mold, and the extrusion funnel phenomena of the bar and the mold increase, resulting in the decrease of a material utilization rate. If the extrusion speed is too small, the original particle boundaries of the powder alloy will be not sufficiently broken, resulting in insufficient recrystallization and an unsatisfied bar grain size grade. In addition, if the extrusion speed is too small, a recrystallization time of the alloy will be long, and grains have enough time to grow, such that coarse and non-uniform grains with a large grain size grade are produced, which does not meet the subsequent production standard. If the extrusion speed is too large, the bar ingot acquires a large amount of energy per unit time, and a large number of recrystallization nuclei are produced, resulting in a large number of fine grains. However, because a large amount of heat is generated due to deformation, the heat dissipation is slow, and large grains appear in a structure, such that the structure of the bar does not meet a corresponding standard. Through a synergistic effect of the extrusion die angle and the extrusion speed, the present invention can ensure that the extruded bar can have a large extrusion ratio and a homogeneous structure and the phenomena such as extrusion failure can be avoided. In an actual operation, the extrusion of the present invention can be conducted by a 680MN extrusion-die forging dual function unit.

According to the invention, in the S5, the extruded bar is air-cooled to room temperature, and the non-steady segments at the head and the tail of the extruded bar are mechanically cut off to obtain the powder metallurgy superalloy bar. Because the method of the present invention can eliminate the "mushroom head" phenomenon to reduce the extrusion funnel phenomenon of the tail of the bar significantly, the corresponding bar can be obtained by removing a small amount of the head and the tail.

The present invention also provides a low-cost, high-homogeneity, and large-scale powder metallurgy superalloy bar manufactured by the hot extrusion method. The low-cost, high-homogeneity, and large-scale powder metallurgy superalloy bar has a diameter of larger than or equal to 300 mm, a core grain size grade of 8 to 11, an edge grain size grade of 8 to 10, and a grain size grade difference of less than or equal to 1.

### Example 1 (invention)

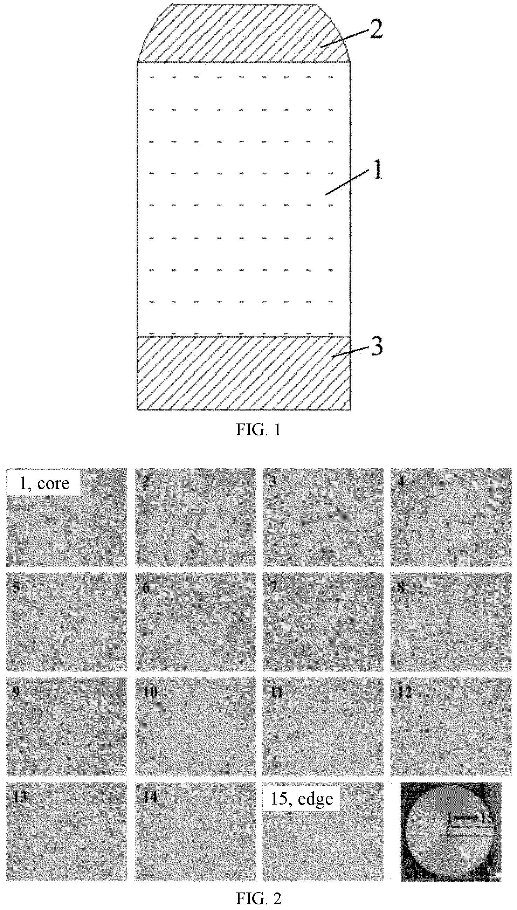

In this example, a hot extrusion method of a low-cost, high-homogeneity, and large-scale powder metallurgy superalloy bar was provided, including the following steps:
S1: An FGH4096 superalloy powder was injected into a vacuum stainless-steel-shell mold (with a rectangular cross section) and subjected to a hot isostatic pressing treatment at a temperature of 1,160°C and a pressure of 130 MPa under argon protection to obtain a powder metallurgy superalloy ingot with a size of φ870 mm.
S2: A front block and a rear block were welded to front and rear ends of the powder metallurgy superalloy ingot respectively to obtain a first extrusion billet. A schematic structural diagram of the first extrusion billet was shown in FIG. 1. Radians corresponding to arcs of two non-parallel sides of a cross section of the front block each were 32°.
S3: The first extrusion billet was preheated to 180°C, an anti-oxidation coating was applied evenly on a surface of the first extrusion billet to obtain a first intermediate billet, and the first intermediate billet was placed in a heating furnace, heated to 1,080°C, and kept at this temperature for 10 h to obtain a second extrusion billet.
S4: A glass powder was evenly sprayed on a surface of the second extrusion billet to obtain a second intermediate billet, a glass block was placed at a front end of the second intermediate billet to obtain a third intermediate billet, and the third intermediate billet was placed in an extrusion die preheated to 180°C to allow extrusion with an extrusion die angle of 100°, an extrusion speed of 22 mm/s, and an extrusion ratio of 8.4:1 to obtain an extruded bar.
S5: The extruded bar was air-cooled to room temperature, and non-steady segments at a head and a tail of the extruded bar were mechanically cut off to obtain the powder metallurgy superalloy bar, where the head was cut off by a length of 280 mm and the tail was cut off by a length of 330 mm to obtain a superalloy bar with a steady segment length of 4,400 mm and a diameter of 300 mm.

### Example 2 (reference - not according to the invention)

The hot extrusion method of a low-cost, high-homogeneity, and large-scale powder metallurgy superalloy bar in this example was similar to the hot extrusion method in Example 1, except that, in the S4, the extrusion die angle was 90°, the extrusion speed was 25 mm/s, and the extrusion ratio was 6:1.

### Example 3

The hot extrusion method of a low-cost, high-homogeneity, and large-scale powder metallurgy superalloy bar in this example was similar to the hot extrusion method in Example 1, except that, in the S4, the extrusion die angle was 130°, the extrusion speed was 20 mm/s, and the extrusion ratio was 9:1.

### Example 4

The hot extrusion method of a low-cost, high-homogeneity, and large-scale powder metallurgy superalloy bar in this example was similar to the hot extrusion method in Example 1, except that, in the S3, the first extrusion billet was preheated to 150°C.

### Example 5

The hot extrusion method of a low-cost, high-homogeneity, and large-scale powder metallurgy superalloy bar in this example was similar to the hot extrusion method in Example 1, except that, in the S3, the first extrusion billet was preheated to 200°C.

### Example 6

The hot extrusion method of a low-cost, high-homogeneity, and large-scale powder metallurgy superalloy bar in this example was similar to the hot extrusion method in Example 1, except that, in the S3, the first intermediate billet was heated to 1,120°C and kept at this temperature for 16 h.

### Example 7

The hot extrusion method of a low-cost, high-homogeneity, and large-scale powder metallurgy superalloy bar in this example was similar to the hot extrusion method in Example 1, except that, in the S3, the first intermediate billet was heated to 1,040°C and kept at this temperature for 7 h.

### Example 8

The hot extrusion method of a low-cost, high-homogeneity, and large-scale powder metallurgy superalloy bar in this example was similar to the hot extrusion method in Example 1, except that, in the S3, the first intermediate billet was heated to 1,150°C and kept at this temperature for 24 h.

### Example 9

The hot extrusion method of a low-cost, high-homogeneity, and large-scale powder metallurgy superalloy bar in this example was similar to the hot extrusion method in Example 1, except that, in the S2, the radians corresponding to the arcs of the two non-parallel sides of the cross section of the front block for the powder metallurgy superalloy ingot each were 30°.

### Example 10

The hot extrusion method of a low-cost, high-homogeneity, and large-scale powder metallurgy superalloy bar in this example was similar to the hot extrusion method in Example 1, except that, in the S2, the radians corresponding to the arcs of the two non-parallel sides of the cross section of the front block for the powder metallurgy superalloy ingot each were 35°.

### Comparative Example 1

In this comparative example, a hot extrusion method of a large-scale powder metallurgy superalloy bar was provided, including the following steps:
S1: An FGH4096 superalloy powder was injected into a vacuum stainless-steel-shell mold (with a rectangular cross section) and subjected to a hot isostatic pressing treatment at a temperature of 1,160°C and a pressure of 130 MPa under argon protection to obtain a powder metallurgy superalloy ingot with a size of φ870 mm.
S2: A front block and a rear block were welded to front and rear ends of the powder metallurgy superalloy ingot respectively to obtain a first extrusion billet, where the front block was a square block.
S3: The first extrusion billet was preheated to 800°C, an anti-oxidation coating was applied evenly on a surface of the first extrusion billet to obtain a first intermediate billet, and the first intermediate billet was placed in a heating furnace, heated to 1,080°C, and kept at this temperature for 10 h to obtain a second extrusion billet.
S4: A glass powder was evenly sprayed on a surface of the second extrusion billet to obtain a second intermediate billet, a glass block was placed at a front end of the second intermediate billet to obtain a third intermediate billet, and the third intermediate billet was placed in an extrusion die preheated to 180°C to allow extrusion with an extrusion die angle of 60°, an extrusion speed of 30 mm/s, and an extrusion ratio of 8.5:1 to obtain an extruded bar.
S5: The extruded bar was air-cooled to room temperature, and non-steady segments at a head and a tail of the extruded bar were mechanically cut off to obtain the powder metallurgy superalloy bar, where the head was cut off by a length of 600 mm and the tail was cut off by a length of 700 mm to obtain a superalloy bar with a steady segment length of 3,800 mm and a diameter of 300 mm.

### Comparative Example 2

The hot extrusion method of a powder metallurgy superalloy bar in this comparative example was similar to the hot extrusion method in Example 1, except that, in the S4, the extrusion die angle was 85°, the extrusion speed was 22 mm/s, and the extrusion ratio was 8.4:1.

### Comparative Example 3

The hot extrusion method of a powder metallurgy superalloy bar in this comparative example was similar to the hot extrusion method in Example 1, except that, in the S4, the extrusion die angle was 135°, the extrusion speed was 22 mm/s, and the extrusion ratio was 8.4:1.

### Comparative Example 4

The hot extrusion method of a powder metallurgy superalloy bar in this comparative example was similar to the hot extrusion method in Example 1, except that, in the S4, the extrusion die angle was 100°, the extrusion speed was 18 mm/s, and the extrusion ratio was 8.4:1.

### Comparative Example 5

The hot extrusion method of a powder metallurgy superalloy bar in this comparative example was similar to the hot extrusion method in Example 1, except that, in the S4, the extrusion die angle was 100°, the extrusion speed was 26 mm/s, and the extrusion ratio was 8.4:1.

### Comparative Example 6

The hot extrusion method of a powder metallurgy superalloy bar in this comparative example was similar to the hot extrusion method in Example 1, except that, in the S4, the extrusion die angle was 85°, the extrusion speed was 26 mm/s, and the extrusion ratio was 8.4:1.

### Comparative Example 7

The hot extrusion method of a powder metallurgy superalloy bar in this comparative example was similar to the hot extrusion method in Example 1, except that, in the S4, the extrusion die angle was 135°, the extrusion speed was 18 mm/s, and the extrusion ratio was 8.4:1.

### Comparative Example 8

The hot extrusion method of a large-scale powder metallurgy superalloy bar in this comparative example was similar to the hot extrusion method in Example 1, except that, in the S3, the first intermediate billet was heated to 1,170°C and kept at this temperature for 30 h.

### Comparative Example 9

The hot extrusion method of a large-scale powder metallurgy superalloy bar in this comparative example was similar to the hot extrusion method in Example 1, except that, in the S2, the radians corresponding to the arcs of the two non-parallel sides of the cross section of the front block for the powder metallurgy superalloy ingot each were 25°.

### Comparative Example 10

The hot extrusion method of a large-scale powder metallurgy superalloy bar in this comparative example was similar to the hot extrusion method in Example 1, except that, in the S2, the radians corresponding to the arcs of the two non-parallel sides of the cross section of the front block for the powder metallurgy superalloy ingot each were 40°.

FIG. 2 shows images of core and edge structures of the large-scale powder metallurgy superalloy bar manufactured in Example 1 of the present invention, where 1 to 15 correspond to 15 samples collected from a cross section of a rear end face of the bar, respectively; and a center point of the cross section is set as 1, an edge point is set as 15, and the samples are collected at equal intervals along a radius extending from 1 to 15. It can be seen from this figure that a grain size grade difference of a structure of the bar obtained in Example 1 from a core to an edge is less than or equal to 1. The grain size grades and grain size grade differences from a core to an edge of the alloy bars obtained in different examples and comparative examples at the same positions are shown in Table 1.

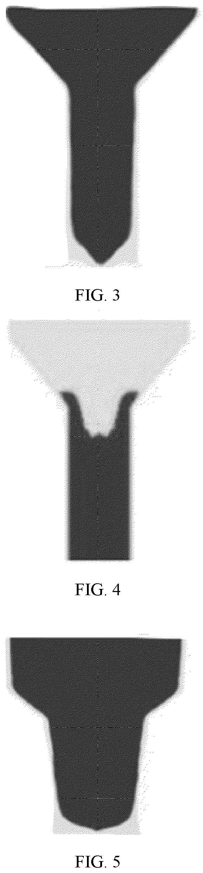

FIG. 3 to FIG. 6 are schematic diagrams of a head and a tail of the large-scale powder metallurgy superalloy bar manufactured in Example 1 and schematic diagrams of a head and a tail of the bar manufactured in Comparative Example 1, respectively. It can be seen from this figure that the bar manufactured in the present invention does not have the "mushroom head" phenomenon, and the extrusion funnel phenomenon of the tail of the bar is significantly reduced, which significantly improves a material utilization rate and thus relatively reduces a production cost. The sizes and material utilization rates of the bars obtained in different examples and comparative examples are shown in Table 2

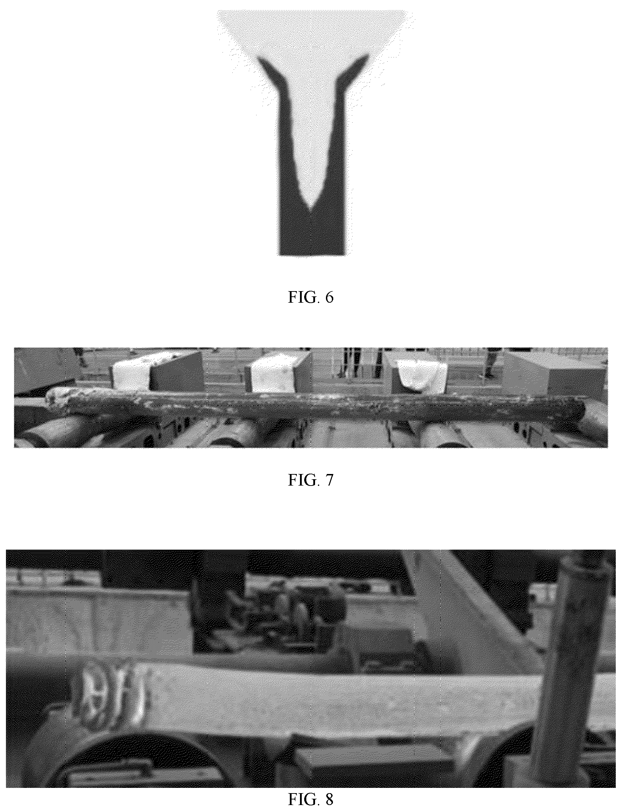

FIG. 7 is a physical picture of the large-scale powder metallurgy superalloy bar manufactured in Example 1 of the present invention. FIG. 8 is a physical picture of the bar manufactured in Comparative Example 1. This physical picture further confirms that the bar manufactured by the hot extrusion method in the present invention does not have the "mushroom head" phenomenon, and the extrusion funnel phenomenon of the tail of the bar is significantly reduced. However, a head of the bar manufactured by the hot extrusion method in Comparative Example 1 has a periodic cracking problem. It can also be known from the data in Table 2 that a length of a tail cut off in a manufacturing process of a powder metallurgy superalloy bar in each example is much smaller than a length of a tail cut off in a manufacturing process of a powder metallurgy superalloy bar of the same length specification in each comparative example, indicating that the extrusion funnel phenomenon of the tail of the bar manufactured by the hot extrusion method of the present invention is significantly reduced.

It can be known from Table 1 and Table 2 that the powder metallurgy superalloy bar manufactured by the method of the present invention has a diameter of larger than or equal to 300 mm, a homogeneous structure, a core grain size grade of 9 to 11, an edge grain size grade of 9 to 10, and a grain size grade difference of less than or equal to 1. In Tables 1 and 2, example 2* corresponds to a reference example since the extrusion ratio is 6:1 and not (8-9):1 as required in the present invention.

**Table 1 Grain size grades and grain size grade differences of powder metallurgy superalloy bars in the examples and comparative examples**

| No. | Core grain size grade | Edge grain size grade | Grain size grade difference |
|---|---|---|---|
| Example 1 | 11 | 10 | 1 |
| Example 2 _{*} | 9 | 10 | 1 |
| Example 3 | 10 | 9 | 1 |
| Example 4 | 10 | 9 | 1 |
| Example 5 | 10 | 9.5 | 0.5 |
| Example 6 | 10 | 9 | 1 |
| Example 7 | 11 | 10 | 1 |
| Example 8 | 9.5 | 9 | 0.5 |
| Example 9 | 9 | 10 | 1 |
| Example 10 | 9.5 | 10 | 0.5 |
| Comparative Example 1 | 9 | 7 | 2 |
| Comparative Example 2 | 7 | 9 | 2 |
| Comparative Example 3 | 9 | 6 | 3 |
| Comparative Example 4 | 9 | 7 | 2 |
| Comparative Example 5 | 7 | 8.5 | 1.5 |
| Comparative Example 6 | 8 | 6 | 2 |
| Comparative Example 7 | 8 | 6 | 2 |
| Comparative Example 8 | 7 | 5 | 2 |
| Comparative Example 9 | 9 | 6 | 2.5 |
| Comparative Example 10 | 7 | 9.5 | 2.5 |

**Table 2 Sizes and material utilization rates of different bars**

| No. | Full length/mm | Diameter/mm | Length of a head cut off/mm | Length of a tail cut off/mm | Steady segment length/mm | Material utilization rate/% |
|---|---|---|---|---|---|---|
| Example 1 | 5440 | 300 | 270 | 310 | 4860 | 89.3 |
| Example 2 _{*} | 5070 | 300 | 300 | 370 | 4400 | 86.8 |
| Example 3 | 4830 | 300 | 330 | 400 | 4100 | 84.5 |
| Example 4 | 5200 | 300 | 280 | 320 | 4600 | 88.5 |
| Example 5 | 5000 | 300 | 350 | 400 | 4250 | 85 |
| Example 6 | 4520 | 300 | 370 | 350 | 3800 | 84.1 |
| Example 7 | 4910 | 300 | 350 | 460 | 4100 | 83.5 |
| Example 8 | 4660 | 300 | 400 | 460 | 3800 | 81.5 |
| Example 9 | 4679 | 300 | 389 | 370 | 3920 | 83.8 |
| Example 10 | 4650 | 300 | 380 | 370 | 3900 | 83.9 |
| Comparative Example 1 | 5100 | 270 | 600 | 700 | 3800 | 74.5 |
| Comparative Example 2 | 4890 | 280 | 350 | 640 | 3900 | 79.8 |
| Comparative Example 3 | 4720 | 290 | 390 | 630 | 3700 | 78.4 |
| Comparative Example 4 | 4600 | 270 | 600 | 800 | 3200 | 69.6 |
| Comparative Example 5 | 4550 | 280 | 400 | 850 | 3300 | 72.5 |
| Comparative Example 6 | 3960 | 290 | 480 | 780 | 2700 | 68.2 |
| Comparative Example 7 | 4850 | 270 | 530 | 620 | 3700 | 76.3 |
| Comparative Example 8 | 4960 | 280 | 700 | 560 | 3700 | 74.6 |
| Comparative Example 9 | 4770 | 290 | 670 | 800 | 3300 | 69.2 |
| Comparative Example 10 | 4860 | 280 | 700 | 460 | 3700 | 76.1 |

## Claims

1. A hot extrusion method of a low-cost, high-homogeneity, and large-scale powder metallurgy superalloy bar,
**characterized in that** the hot extrusion method comprises the following steps:
S1: injecting a superalloy powder into a vacuum stainless-steel-shell mold, and subjecting the superalloy powder to a hot isostatic pressing treatment to obtain a powder metallurgy superalloy ingot;
S2: welding a front block and a rear block to front and rear ends of the powder metallurgy superalloy ingot respectively to obtain a first extrusion billet;
S3: preheating the first extrusion billet to 150°C to 200°C, applying an anti-oxidation coating evenly on a surface of the first extrusion billet to obtain a first intermediate billet, and heating the first intermediate billet to 1,040°C to 1,150°C and holding this temperature to obtain a second extrusion billet;
S4: spraying a lubricant evenly on a surface of the second extrusion billet to obtain a second intermediate billet, placing a glass block at a front end of the second intermediate billet to obtain a third intermediate billet, and placing the third intermediate billet in a preheated extrusion die to allow extrusion to obtain an extruded bar; and
S5: air-cooling the extruded bar to room temperature, and mechanically cutting non-steady segments at a head and a tail of the extruded bar off to obtain the powder metallurgy superalloy bar;
wherein in the S2, an axial cross-section of the front block is a trapezoid-like shape that has two non-parallel sides in arcs and is axisymmetric;
wherein radians of the arcs each are 30° to 35°;
wherein in the S3, the temperature is held for 7 h to 24 h;
wherein in the S4, a preheating temperature for the preheated extrusion die is 150°C to 200°C;
wherein in the S4, an extrusion die angle is 90° to 130°;
wherein in the S4, an extrusion speed is 20 mm/s to 25 mm/s;
wherein in the S4, an extrusion ratio is (8-9):1.

2. A low-cost, high-homogeneity, and large-scale powder metallurgy superalloy bar,
**characterized in that** the low-cost, high-homogeneity, and large-scale powder metallurgy superalloy bar is manufactured by the hot extrusion method according to claim 1;
wherein the low-cost, high-homogeneity, and large-scale powder metallurgy superalloy bar has a diameter of larger than or equal to 300 mm, a high material utilization rate, a homogeneous structure, a core grain size grade of 9 to 11, an edge grain size grade of 9 to 10, and a grain size grade difference of less than or equal to 1.

## Patentansprüche

1. Heißpressverfahren für eine kostengünstige, hochhomogene und großdimensionale Pulvermetallurgie-Superlegierungsstange,
**gekennzeichnet dadurch, dass** das Heißpressverfahren die folgenden Schritte umfasst:
S1: Einspritzen eines Superlegierungspulvers in eine vakuumbehaftete Edelstahlform und Unterziehen des Superlegierungspulvers einer heißen isostatischen Pressung, um einen Pulvermetallurgie-Superlegierungsbarren zu erhalten;
S2: Schweißen eines vorderen Blocks und eines hinteren Blocks auf die vorderen und hinteren Enden des Pulvermetall-Legierungseingusses, um einen ersten Strangpressbarren zu erhalten;
S3: Vorheizen des ersten Strangpressbarren auf 150°C bis 200°C, gleichmäßiges Auftragen einer Antioxidationsbeschichtung auf eine Oberfläche des ersten Strangpressbarren, um einen ersten Zwischenrohbarren zu erhalten, Erhitzen des ersten Zwischenrohbarren auf 1.040°C bis 1.150°C und Halten dieser Temperatur, um einer zweiten Strangpressbarren zu erhalten;
S4: gleichmäßiges Aufsprühen eines Schmiermittels auf die Oberfläche des zweiten Strangpressbarren, um einen zweiten Zwischenrohbarren zu erhalten, Platzieren eines Glasblocks an einem vorderen Ende des zweiten Zwischenrohbarren, um einen dritten Zwischenrohbarren zu erhalten, und Platzieren des dritten Zwischenrohbarren in eine vorgeheizte Strangpressform, um die Strangpressung zur Herstellung einer Strangpressstange zu ermöglichen; und
S5: Abkühlen der Strangpressstange auf Raumtemperatur, und mechanisches Abschneiden der nicht stabilen Segmente an einem Kopf- und einem Ende der Strangpressstange, um die Pulvermetallurgie-Superlegierungsstange zu erhalten;
wobei im S2 ein axialer Querschnitt des vorderen Blocks eine trapezähnliche Form hat, die zwei nicht parallele Seiten in Bögen besitzt und axialsymmetrisch ist;
wobei jedes Bogenmaß der Bögen von 30° bis 35° ist;
wobei in S3 die Temperatur für 7 bis 24 Stunden gehalten wird;
wobei in S4 eine Vorheiztemperatur für die vorgeheizte Strangpressform von 150°C bis 200°C ist;
wobei im S4 ein Strangpressformwinkel von 90° bis 130° beträgt;
wobei in S4 eine Strangpressgeschwindigkeit von 20 mm/s bis 25 mm/s ist;
wobei im S4 ein Strangpressverhältnis (8-9):1 ist.

2. Kostengünstige, hochhomogene und großdimensionale Pulvermetallurgie-Superlegierungsstange,
**gekennzeichnet dadurch, dass** die kostengünstige, hochhomogene und großdimensionale Pulvermetallurgie-Superlegierungsstange durch das Heißpressverfahren nach Anspruch 1 hergestellt wird;
wobei die kostengünstige, hochhomogene und großdimensionale Pulvermetallurgie-Superlegierungsstange einen größeren als oder gleichen 300 mm Durchmesser, eine hohe Materialausnutzung, eine gleichmäßige Struktur, eine Kernkorngrößenklasse von 9 bis 11, eine Korngrößenklasse am Rand von 9 bis 10 und eine kleinere als oder gleiche 1 Korngrößenklassedifferenz hat.

## Revendications

1. Procédé d'extrusion à chaud d'une barre en superalliage de métallurgie des poudres à faible coût, à haute homogénéité et à grande échelle,
**caractérisé en ce que** le procédé d'extrusion à chaud comprend les étapes suivantes:
S1 : injecter une poudre de superalliage dans un moule à coquille en acier inoxydable sous vide, et soumettre la poudre de superalliage à un traitement de pressage isostatique à chaud afin d'obtenir un lingot en superalliage de métallurgie des poudres;
S2 : souder un bloc avant et un bloc arrière à l'extrémité avant et l'extrémité arrière de l'lingot en superalliage de métallurgie des poudres respectivement pour obtenir un premier lingot d'extrusion ;
S3 : préchauffer le premier lingot d'extrusion à une température de 150°C à 200°C, appliquer de manière uniforme un revêtement anti-oxydation sur la surface du premier lingot d'extrusion afin d'obtenir un premier lingot intermédiaire, et chauffer le premier lingot intermédiaire à une température de 1040°C à 1150°C et maintenir cette température afin d'obtenir un deuxième lingot d'extrusion;
S4 : pulvériser de manière uniforme un lubrifiant sur une surface du deuxième lingot d'extrusion afin d'obtenir un deuxième lingot intermédiaire, placer un bloc de verre à une extrémité avant du deuxième lingot intermédiaire afin d'obtenir un troisième lingot intermédiaire, et placer le troisième lingot intermédiaire dans une matrice d'extrusion préchauffée afin de permettre à l'extrusion d'obtenir une barre extrudée; et
S5 : refroidir à l'air la barre extrudée jusqu'à la température ambiante, et découper mécaniquement les segments instables à la tête et à la queue de la barre extrudée afin d'obtenir la barre en superalliage de métallurgie des poudres;
dans l'étape S2, une section transversale axiale du bloc avant est en forme semblable à un trapèze qui possède deux côtés non parallèles en arcs et est axisymétrique;
chaque radian des arcs est de 30° à 35°;
dans l'étape S3, la température est maintenue pendant 7 h à 24 h;
dans l'étape S4, une température de préchauffage pour la matrice d'extrusion préchauffée est de 150°C à 200°C;
dans l'étape S4, un angle de matrice d'extrusion est de 90° à 130°;
dans l'étape S4, une vitesse d'extrusion est de 20 mm/s à 25 mm/s;
dans l'étape S4, un rapport d'extrusion est de (8-9) : 1.

2. Barre en superalliage de métallurgie des poudres à faible coût, à haute homogénéité et à grande échelle,
**caractérisée en ce que** la barre en superalliage de métallurgie des poudres à faible coût, à haute homogénéité et à grande échelle est fabriquée au moyen de le procédé d'extrusion à chaud selon la revendication 1;
la barre en superalliage de métallurgie des poudres à faible coût, à haute homogénéité et à grande échelle possède un diamètre supérieur ou égal à 300 mm, un taux d'utilisation du matériau élevé, une structure homogène, un niveau de granularité central de 9 à 11, un niveau de granularité à bord de 9 à 10 et une différence du niveau de granularité inférieure ou égale à 1.
